# EUROPÄISCHE PATENTSCHRIFT

(11) **EP 0 833 961 B1**
(45) Veröffentlichungstag und Bekanntmachung des Hinweises auf die Patenterteilung: **15.09.1999**
(21) Anmeldenummer: 96917489.5
(22) Anmeldetag: 03.06.1996
(51) Int. Cl.: C23F 1/46, C22B 3/00

(54) **VERFAHREN ZUR AUFARBEITUNG AMMONIAKALISCHER METALLÖSUNGEN**
AMMONIACAL METAL SOLUTION RECYCLING PROCESS
PROCEDE DE RECYCLAGE DE SOLUTIONS AMMONIACALES DE METAUX

(30) Priorität: 12.06.1995 DE 19521352
(43) Veröffentlichungstag der Anmeldung: 08.04.1998
(73) Patentinhaber: Henkel Kommanditgesellschaft auf Aktien, 40191 Düsseldorf (DE)
(72) Erfinder: KEHL, Ralf, D-40489 Düsseldorf (DE); SCHWAB, Werner, D-40789 Monheim (DE)
(86) Internationale Anmeldenummer: EP9602385
(87) Internationale Veröffentlichungsnummer: WO9641902

(56) Entgegenhaltungen:
- EP-A- 0 005 415
- DE-A- 4 334 696
- US-A- 3 743 585
- US-A- 3 981 968
- US-A- 4 012 482
- US-A- 4 083 758
- US-A- 4 222 832
- INDUSTRIAL & ENGINEERING CHEMISTRY RESEARCH, Bd. 28, Nr. 11, 1.November 1989, Seiten 1664-1669, XP000083413 PANDEY B D ET AL: "EXTRACTION OF NICKEL AND COPPER FROM THE AMMONIACAL LEACH SOLUTION OF SEA NODULES BY LIX 64N"

## Beschreibung

### Gebiet der Erfindung

Die Erfindung betrifft ein Verfahren zur Aufarbeitung ammoniakalischer, wertmetallhaltiger Lösungen, insbesondere von kupferhaltigen Lösungen, welches bei der Solvent-Extraktion eine Reduzierung des Ammoniakverbrauchs sowie eine Verringerung des unerwünschten Salzaustrags gegenüber dem Stand der Technik beinhaltet.

### Stand der Technik

Bei der Herstellung gedruckter Leiterplatten (PCB = Printed Circuit Boards) für die Elektronik-Industrie reichert sich die als Ätzlösung verwendete Ammoniumchlorid-Lösung während des kontinuierlichen Ätzprozesses mit Kupfer an. Während dieses Vorgangs steigt der Kupfergehalt in solchen Lösungen ständig an, bis schließlich bei einem Gehalt etwa 130 - 150 g Cu pro Liter Lösung eine für den Ätzprozess kritische Grenze erreicht wird. Um die Bearbeitung der Leiterplatten störungsfrei fortführen zu können muß überschüssiges Kupfer aus der Ätzlösung abgeführt werden.

Dies kann mit verschiedenen Methoden erfolgen. Beispielsweise werden solche Lösungen gesammelt, eingedampft und das Kupfer durch Zusatz geeigneter Fällungsreagenzien am Ende in Form eines Salzes, meist als Kupferhydroxyd, gewonnen. Solche Techniken sind energieaufwendig, wenig selektiv, und das als Endprodukt erhaltene Kupfer ist von minderer Qualität. Ein weiterer Nachteil dieser Methode ist, daß keine Möglichkeit besteht, die verbrauchte Ätzlösung vollständig zu regenerieren und damit emeut im Ätzprozess einzusetzen.

Aus der Druckschrift EP-A-005415 ist ein Verfahren bekannt, das sich zur Enffemung von Kupfer aus einer Ätzlösung der Solvent-Extraktion bedient. Das Verfahren arbeitet mit einem schwachen, in einem organischen Solvens gelösten Extraktionsmittel, das den Kupfergehalt in der Ätzlösung nach der Extraktion von 160 g/l auf etwa 97 g/l absenkt. Als Extraktionsmittel werden hier bevorzugt beta-Diketone eingesetzt. Die organische Extraktionslösung wird mit Wasser gewaschen, das sich mit zunehmender Verfahrensdauer mit großen Mengen an Ammoniumsalzen, Ammoniak und Kupfer anreichert. Dieses Waschwasser wird mit Natriumhydroxyd versetzt und eingedampft, wobei der Ammoniak ausgetrieben und das Kupfer als Kupferhydroxid abgeschieden wird. Das in der organischen Phase enthaltene Kupfer wird mit starker Schwefelsäure gestrippt und aus der wässrigen Lösung durch Elektrolyse gewonnen. Das Verfahren wird _{"}on site" betrieben, ist also dem Ätzprozess nachgeschaltet.

Die Druckschrift EP-A-036401 offenbart einen ähnlichen Prozess, bei dem jedoch die Extraktion in einem oder mehreren Schritten mit verschiedenen Extraktionsmitteln oder deren Mischungen erfolgt. Hier werden beispielsweise neben den aus der EP-A-005415 bekannen beta-Diketonen noch Hydroxyoxime als stärkere Extraktionsmittel eingesetzt. So läßt sich der Kupfergehalt in der Ätzlösung auf insgesamt 6.5 g/l Abzusenken. Das Verfahren ist aufgrund der Notwendigkeit zwei getrennte Extraktionskreisläufe und unterschiedliche Reagenzien oder deren Mischungen zu benutzen und/oder mehrere unterschiedliche, nacheinander geschaltete Extraktionsstufen zu betreiben sehr aufwendig und hat sich damit in der Praxis bisher kaum durchsetzen können. Die beladene Extraktionslösung wird auch im hier beschriebenen Verfahren mit Mineralsäure gewaschen, um die organische Phase von eingeschlepptem Ammoniak zu befreien.

Es ist auch bekannt, daß sich bestimmte Wertmetalle bevorzugt im alkalischen Bereich extrahieren lassen. So beschreibt die US 3,743,585 ammoniumalkalische Nickelsulfatlösungen mit einem pH-Wert größer als 6,5, die mit geeigneten lonenaustauschharzen vom Nickel befreit werden. Die mit Nickel beladenen Austauschharze werden mit Wasser gewaschen und dann durch Behandlung mit einer schwefelsauren Lösung das Nickel aus dem Austauschharz entfernt wird. Die Schrift macht aber keine Aussagen über den pH-Wert des Waschwassers für das Austauschharz. Die US 4,012,482 beschreibt ein Verfahren zur Entfernung von Ammoniak aus Metall-beladenen Oximen, wobei diese Oxime mit einer wässrigen Ammoniumhydrogencarbonatlösung gewaschen werden. Die Verwendung von Ammoniumbicarbonat-haltigen wässrigen Lösungen zum Waschen von Ketoxim-haltigen Extraktionschemikalien wird auch von B. D. Pandey et al. beschrieben (Int. Eng. Chem. Dres., Vol. 28, No. 11, 1998, Seite 1668).

Obwohl die genannten Solvent-Extraktionsverfahren im Vergleich zur Aufarbeitung mit Fällungsreagenzien effizienter sind, weisen sie doch einige gravierende Nachteile auf. So kann beispielsweise der Kupfergehalt in der extrahierten Ätzlösung zwar auf Werte abgesenkt werden, die prinzipiell eine Weiterführung des Ätzprozesses erlauben, der Kupfergehalt ist jedoch mit ca. 90 g/l bzw. 6.5 g/l noch sehr hoch. Dies gilt insbesondere im Hinblick auf eine Regenerierung und Wiederverwertung der Ätzlösung. Eine Absenkung des Kupfergehalts auf Werte im ppm-Bereich ist mit diesen Verfahren nicht möglich. Damit kann auch die verbrauchte Ätzlösung nicht vollständig aufgearbeitet und wieder eingesetzt werden, was im Hinblick auf die Gesamtmenge an Ätzlösung wünschenswert wäre.

Mit der Einführung neuer, noch effizienterer Extraktionsmittel wie beispielsweise LIX^{®}84, einem Ketoxim von der Fa. Henkel Corp., können zwar ohne die Verwendung von Extraktionsmittelgemischen oder getrennten, unterschiedlichen Extraktionskreisläufen, sehr niedrige Kupferkonzentrationen im angestrebten ppm-Bereich in der gereinigten Ätzlösung erreicht werden, die Komplexbildner besitzen aber die Neigung als Nebenreaktion freien Ammoniak zu komplexieren und in die organische Phase einzuschleppen. Um den Kupfergehalt der extrahierten Ätzlösung jedoch zu minimieren, muß das Extraktionsmittel im Überschuß eingesetzt werden.

Ein gravierender Nachteil beim Einsatz von solch stärkeren Extraktionsmitteln besteht nun darin, daß neben der eigentlichen Extraktion des Kupfers in die organische Phase ein störender, unerwünschter Effekt in Form einer Extraktion von freiem Ammoniak, welches in der verbrauchten Ätzlösung immer enthalten ist, sowie eines Einschleppens wäßriger, ammoniakalischer Phase festzustellen ist.

In der DE-A143 34 696 wird ein solches Extraktionsverfahren mit einem Hydroxyoxim als starkem Extraktionsmittel beschrieben. Zur Reinigung der organischen Phase wird auch hier eine Wäsche mit saurem Wasser durchgeführt, wobei als Aufarbeitungsschritt zur Entsalzung des Waschwassers nach der Ammoniakextraktion die Verdampfung mit anschließender Rückführung des Ammoniumsalzes in die Atzlösung angegeben ist. Neben dem erheblichen Energieaufwand für die Wasserverdampfung besteht im o.g. Verfahren noch die Notwendigkeit zur Aufrechterhaltung eines Feststoffstroms, was einen erhöhten Aufwand gegenüber reinen Flüsigkeitsströmen darstellt.

Dies entspricht der bisherigen Verfahrenspraxis, zur Entfernung ammoniakalischer Verunreinigungen das organische Extraktionsmittel mit wässriger, verdünnter Mineralsäure, bevorzugt HCI, solange zu waschen, bis der Ammoniak vollständig als Ammoniumsalz in die wässrigen Phase übergegangen ist.

Nachteilig wirkt sich bei allen geschilderten Verfahren aus, daß durch das saure Waschen der organischen Lösung zur Entfernung des Ammoniaks ständig Ammoniumsalze in wässriger Lösung gebildet werden und die Ammoniakkonzentration in der Ätzlösung abnimmt. Entweder muß das Ammoniumsalz aus der wässrigen Phase wiedergewonnen werden um es emeut einzusetzen, was eine zusätzliche Trennoperation erfordert, oder es muß der Ätzlösung ständig Ammoniak zugeführt werden, was als zusätzlicher Kostenfaktor den Prozess unwirtschaftlicher macht.

Während das Waschen mit Salzsäure zu Ammoniumchlorid führt, das nach weiteren Trennoperationen wieder in den Ätzprozess zurückgeführt werden kann, birgt dieser Prozess die Gefahr, daß Chloridionen mit in den Stripping-Prozess, und damit auch mit in das Elektrolyseverfahren zur Abscheidung des Wertmetalls eingeschleppt werden können. Dies kann beispielsweise erhebliche Störungen der Metall-Gewinnungselektrolyse zur Folge haben, die sich in einer schlechteren Qualität des abgeschiedenen Wertmetalls äußern oder Betriebsunterbrechungen hervorrufen. Deshalb gab es Be-strebungen, die erste Waschstufe mit Schwefelsäure durchzuführen, um so die Gefahr einer Kontamination durch Chloridionen zu minimieren. Nachteilig bei dieser Verfahrensweise wirkt sich allerdings aus, daß das dabei gebildete Ammoniumsulfat nicht wieder in den Kreislauf eingespeist werden kann und daher sowohl durch den ständigen Verbrauch von Ammoniak und/oder Ammoniumchlorid wie auch durch die Entsorgungskosten für das Ammoniumsulfat einen zusätzlichen Kosten-faktor darstellt.

Aufgabe der Erfindung war es nun ein Verfahren zur Aufarbeitung wertmetallhaltiger Ätzlösungen zur Verfügung zu stellen, mit dem sich sowohl der physikalisch als auch der in komplexierter Form eingeschleppte Ammoniak aus der organischen Extraktionslösung entfernen und auf einfache Weise wieder in den Kreislauf der Ätzlösung einspeisen läßt: Weiterhin bestand das Ziel der Erfindung darin, den Salzaustrag in Form von Ammoniumsalzen zu minimieren. Ein weiteres Ziel der Erfindung bestand darin das Verfahren so zu wählen, daß es sich in bereits bekannte Verfahren zur Metallextraktion eingliedern läßt und zu einem weitgehend vollständigen Recycling der gesamten Ätzlösung führt.

### Beschreibung der Erfindung

Gegenstand der Erfindung ist ein Verfahren zur Aufarbeitung von wässrigen Lösungen die Ammoniak, mindestens ein Ammoniumsalz sowie Metallionen in gelöster Form enthalten. und die bei der Behandlung wertmetallhaltiger Substrate anfallen, wobei die Aufarbeitung mindestens aus
a) einer oder mehreren Extraktionsstufen, wobei die wertmetallhaltige Lösung mit einem organischen, nicht mit Wasser mischbaren Extraktionsmittel in Kontakt gebracht wird,
b) einer oder mehreren sukzessiven Waschstufen, in denen das abgetrennte, wertmetallhaltige, organische Extraktionsmittel mit wässrigen Flüssigkeiten gewaschen wird sowie
c) einer oder mehreren Stripping-Stufen, in denen das Wertmetall aus der organischen in eine wässrige Phase überführt wird und in denen das organische Extraktionsmittel regeneriert wird,
besteht, dadurch gekennzeichnet, daß in der ersten Waschstufe Wasser verwendet wird, dessen pH-Wert über 6,5 liegt, und dieses Waschwasser nach der Waschstufe vor dem erneuten Gebrauch mit dem organischen, regenerierten Extraktionsmittel in Kontakt gebracht wird.

Wertmetalle im Sinne der Erfindung sind alle Metalle, die sich durch eine wässrige Lösung die ein Ammoniumsalz, Ammoniak sowie gegebenenfalls weitere Zusatzstoffe enthält, aus einem Substrat in ionischer Form in die wässrige Phase überführen lassen. Es spielt dabei keine Rolle, ob das Wertmetall im Substrat in der elementaren Neutralform oder in ionischer Form, beispielsweise als Oxid, Sulfid, Selenid, Tellurid, Sulfit, Carbonat, Nitrat, Nitrit, Silicat, Halogenid oder Cyanid vorkommt, wobei auch Verbindungen in erfindungsgemäßer Form aufgearbeitet werden können, die gemischte Salze mit unterschiedlichen Wertmetallen darstellen, sowie solche Verbindungen, die beispielsweise Kristallwasser oder ähnliche, nicht metallisch, ionisch oder kovalent gebundenen Elemente oder Moleküle enthalten.
Als Wertmetalle gelten im Sinne der vorliegenden Erfindung insbesondere alle Übergangsmetalle, die sich dem Fachmann aus dem Periodensystem der Elemente offenbaren. Hierzu zählen insbesondere Nickel, Kupfer, und Zink, wobei erfindungsgemäß Kupfer als Wertmetall bevorzugt ist.

Substrate im Sinne der vorliegenden Erfindung sind sowohl die aus natürlichen Quellen stammenden Träger der Wertmetalle, wie z.B. die oxidischen, sulfidischen und die gemischten Erze wie sie im Berg- oder Tagebau gewonnen werden sowie die Produkte der sich an die bergbauliche Gewinnung anschließenden, synthetischen Aufarbeitung der Erze. Hierbei ist sowohl eine erfindungsgemäße Behandlung der Hauptprodukte aus der primären Gewinnung, beispielsweise bei der Separation verschiedener Wertmetalle, wie auch der Nebenprodukte aus der synthetischen Aufarbeitung zur Rückgewinnung von Wertmetallen, die in geringer Konzentration in Abfallstoffen enthalten sind, möglich.
Neben der Behandlung von Wertmetallen bei ihrer Gewinnung aus natürlichen Substraten oder aus Produkten und/oder Nebenprodukten der sich daran anschließenden synthetischen Schritte läßt sich das erfindungsgemäße Verfahren auch bei der Behandlung solcher Wertmetallquellen einsetzen, die eine Verbindung aus Wertmetall und synthetischem Substrat darstellen. Solche Substrate stellen beispielsweise die in der Elektronikindustrie benuzten, gedruckten Schaltungen dar. Bei der Herstellung solcher gedruckter Schaltungen wird in großen Mengen unter Verwendung einer ammoniakalischen Lösung von Ammoniumchlorid in Wasser als Ätzlösung elementares Kupfer von einer aus synthetischen Polymeren bestehenden Platte gelöst und in ionischer Form in die wässrige Lösung überführt.

Die erfindungsgemäße Aufarbeitung solcher wässrigen Wertmetalllösungen aus der Bearbeitung kupferhaltiger elektronischer Baugruppen stellt die bevorzugte Ausführungsform der vorliegenden Erfindung dar.

Das Gewichtsverhältnis von Wertmetall zu Substrat, sowie der gewichtsprozentuale Anteil des Wertmetalls in seiner Verbindung spielt für die erfindungsgemäße Aufarbeitung keine Rolle.

Eine der folgenden Beschreibung zugrundeliegende Ausführungsform der Erfindung, die beispielhaften und nicht limitierenden Charakter besitzen soll, ist in Schema 1 dargestellt.
Hierin beziehen sich die ausgefüllten Linien auf den Transport wässriger Phasen, während die nicht ausgefüllten Linien den Transport organischer Phasen anzeigen.
Ansonsten bedeuten:
- 1:: Zulauf der wässrigen, verbrauchten Ätzlösung,
- 2, 3, 4:: "mixer-settler" für die Extraktion
- 5:: Austritt der aufgearbeiteten Ätzlösung (Raffinatphase),
- 6:: Aktivkohlefilter,
- 7:: Regenerierte Ätzlösung zur Wiederverwendung,
- 8:: Austritt der beladenen organischen Phase,
- 9 :: Abscheider
- 10:: Pufferbehälter
- 11:: Rückführung eingeschleppter wässriger Phase in die Ätzlösung,
- 12:: erste Waschstufe, deren Wasser einen pH-Wert über 6,5 aufweist,
- 13:: Zulauf des Waschwassers,
- 14:: Austritt beladener organischer Phase nach dem Waschen,
- 15:: saure Waschstufe mit pH-Kontrolle,
- 16:: Austritt beladener organischer Phase nach dem sauren Waschen,
- 17,18:: Stripping-Stufen,
- 19:: Austritt der wertmetallhaltigen stripping-Lösung
- 20:: Elektrolyse
- 21:: Einspreisung der sauren Stripping-Lösung für die saure, pH-kontrollierte Waschstufe (14),
- 22:: Austritt der gestrippten organischen Phase,
- 23:: Zulauf der gestrippten organischen Phase in die Waschstufe
- 24:: Abscheider
- 25:: Pufferbehälter
- 26:: Rückführung der eingeschleppten, wässrigen Phase in den Stripping-Kreislauf,
- 27:: Waschstufe zur internen Ammoniak-Rückführung
- 28:: Rückführung der gestrippten organischen Phase in den Extraktionskreislauf
- 29:: Rückführung des Waschwassers aus der Waschstufe für die gestrippte organische Phase in die erste Waschstufe für die beladene organische Phase (12)
- 30:: Zulauf des Waschwassers aus der zentralen Waschstufe in die Waschstufe 27

Bei der Aufarbeitung der wertmetallhaltigen Lösungen wird die wertmetallhaltige, wässrige Lösung, bevorzugt eine beladene, wässrige Ätzlösung, zunächst über einen Zulauf (1) in eine oder mehrere, seriell oder parallel geschaltete sogenannte _{"}mixer-settler"-Systeme (2, 3, 4) überführt, dort durch intensives Rühren mit einem organischen Extraktionsmittel vermischt und danach in einer Ruhezone in eine organische und eine wässrige Phase getrennt.

In einem _{"}mixer-settler"-System werden zwei nicht miteinander mischbare Flüssigkeiten zunächst durch intensives Rühren und damit verbundener Oberflächenvergrößerung der Phasengrenze miteinander in Kontakt gebracht, um sich danach in einer durch einen Überlauf gespeisten Ruhezone wieder in die einzelnen Phasen zu trennen.

Unter einer verbrauchten, wässrigen Ätzlösung versteht der Fachmann eine solche Atzlösung, deren Gehalt an Wertmetallionen so hoch ist, daß die gewünschte Auflösung des Wertmetalls nicht mehr in der geforderten Geschwindigkeit und/oder mit der geforderten Selektivität abläuft, und/oder deren chemische und/oder physikalische Eigenschaft in einer Form verändert ist, daß das gesamte, der Auflösung des Wertmetalls zugrundeliegende Verfahren nicht mehr ablaufen kann.

Die wertmetallhaltige, wässrige Lösung enthält üblicherweise Wertmetallionen in einer Konzentration von 0.1 bis 200 g/l, wobei die jeweilige Konzentration sowohl vom einzelnen Wertmetall als auch vom eingesetzten Substrat abhängig sein kann. Bevorzugt werden solche Lösungen aufgearbeitet, die einen Wertmetallgehalt zwischen 50 und 200 g/l, insbesondere von 100 bis 200 g/l und besonders bevorzugt zwischen 120 und 200 g/l aufweisen.

Neben den Wertmetallionen enthält die wertmetallhaltige, wässrige Lösung noch ein oder mehrere Ammoniumsalze, bevorzugt Ammoniumchlorid, gegebenenfalls Ammoniak sowie gewünschtenfalls weitere Zusatzstoffe.

Die aufgearbeitete Ätzlösung kann durch einen Austritt (5) zur Entfernung von Spuren der organischen Phase über einen Aktivkohlefilter (6) als Regenerat für den Ätzprozess wiederverwendet werden (7).

Als Extraktionsmittel können flüssige, nicht mit Wasser mischbare Komplexbildner eingesetzt werden, bevorzugt ist jedoch der Einsatz fester oder flüssiger Komplexbildner, die in der Regel in wenig oder nicht mit Wasser mischbaren, inerten, organischen Lösungsmitteln gelöst sind. Besonders bevorzugt ist der Einsatz einer organischen Extraktionslösung, die einen oder mehrere Komplexbildner in einem organischen Lösungsmittel enthält, die mit Metallionen einen in der organischen Extraktionslösung löslichen Komplex bilden.
Als inerte organische Lösungsmittel, die wenig mit Wasser mischbar oder darin löslich sind kommen z.B. folgende Verbindungen in Frage: aliphatische, cycloaliphatische, oder aromatische Kohlenwasserstoffe oder deren Mischungen mit hohem Siedepunkt, chlorierte Kohlenwasserstoffe, Ketone oder Ether mit hohem Siedepunkt oder auch Mischungen derartiger Verbindungen. Bevorzugt werden als wenig wasserlösliche oder wenig mit Wasser mischbare organische Lösungsmittel Kerosine oder deren Mischungen verwendet.

Das Mengenverhältnis von organischer zu wässriger Phase läßt sich durch Variation der Fließgeschwindigkeiten von organischer (O) und wäßriger Phase (A) einstellen. Erfindungsgemäß kann die Extraktion mit einem Verhältnis von O/A von 20/1 bis 1/1, bevorzugt 15/1 bis 5/1 und insbesondere bevorzugt von 12/1 bis 8/1 durchgeführt werden.

Die beladene organische Phase kann gegebenenfalls über einen Zulauf (8) in einen oder mehrere in Serie oder parallel angeordnete Abscheider (9) und/oder Pufferbehälter (10) überführt und dort weitestgehend von Eingeschleppter wäßriger Phase befreit werden, während die abgetrennte wäßrige Phase in der Regel wieder in den Extraktionsprozeß eingespeist wird (11).

Unter beladener organischer Phase ist diejenige organische Flüssigkeit zu verstehen, die nach dem Extraktionsprozeß den größten Teil der Wertmetallionen aus der wertmetallhaltigen wässrigen Lösung in komplexierter Form aufgenommen hat.

Als erfindungswesentliches Merkmal folgt eine erste wässrige Waschstufe (12), deren Wasser einem pH-Wert über 6,5 aufweist, in de die beladene organische Phase in einem ,,mixer-settler"-System durch einen Zulauf (13) mit Wasser versorgt und gewaschen wird, das in der Regel 0,1 bis 10 Gew.-% an Ammoniumchlorid enthält.
In einer bevorzugten Ausführungsform wird Wasser eingesetzt, das 0,5 bis 5 Gew.-% und insbesondere bevorzugt 0,5 bis 1,5 Gew.-% Ammoniumchlorid enthält.
Nach dem Waschen werden die Phasen überlicherweise in einen wäßrigen und einen organischen Anteil getrennt. In der wäßrigen Lösung befindet sich nun neben dem vorgelegten Ammoniumsalz noch freier, aus der komplexierten Form in der organischen Phase in die wäßrige Phase ausgewaschener Ammoniak. In der organischen Phase befindet sich hauptsächlich das komplexierte Wertmetall sowie Komplexierungsmittel und wenig komplexierter Ammoniak.

Die abgeschiedene organische Phase wird nun in der Regel nach Überführung (14) in eine nachfolgenden Stufe (15) mit Wasser gewaschen, das 0.1 bis 10 Gew.-%, bevorzugt 0.5 bis 5 Gew.-% und besonders bevorzugt 0.1 bis 1.5 Gew.-% eines Salzes, bevorzugt Natriumsulfat, enthält und dem zur Regulierung des pH-Werts eine Mineralsäure zugegeben wird. Bevorzugt wird hierbei der pH-Wert auf 4.5 bis 6.0 eingestellt, wobei der Bereich von 4.8 bis 5.5 und insbesondere der Bereich von 5.0 bis 5.3 besonders bevorzugt ist.
Die gewaschene organische Extraktionslösung wird nun (16) vorzugsweise in einer oder mehreren in Serie oder parallel geschalteten Strippingstufen (17, 18) vom Wertmetall befreit. Das Stripping erfolgt dabei in der Regel durch in Kontakt bringen der organischen Extraktionslösung mit verdünnter Mineralsäure mit einem pH-Wert von weniger als 4, wobei ein pH-Wert von weniger als 2 und insbesondere weniger als 1 bevorzugt ist. Die Wahl des gewünschten pH-Wertes ergibt sich für den Fachmann sofort in Kenntnis des benutzten Extraktionsmittels und des Wertmetalls.

Bevorzugt wird als Mineralsäure Schwefelsäure eingesetzt.
Bei diesem Waschvorgang werden die komplexierten Wertmetallionen in Form ihrer Salze in die wässrige Phase überführt, während der protonierte Komplexbildner im organischen Lösungsmittel zurückbleibt. Die saure wässrige Metallsalzlösung wird üblicherweise nach der Überführung (19) in eine Elektrolysestufe (20) weitgehend vom Wertmetall befreit und anschließend in den Stripping-Kreislauf zurückgeführt.

Ein geringer Teil der sauren wertmetallhaltigen Lösung kann durch kontrollierte Einspeisung (21) zur pH-Einstellung in der sauren Waschstufe (15) verwendet werden.
Die gestrippte organische Extraktionslösung wird gegebenenfalls nach dem Überführen (22) in eine oder mehrere in Serie oder parallel geschaltete Abscheider (24) oder Pufferbehälter (25) weitgehend von eingeschleppter wässriger Strip-Phase befreit, die in den Stripping-Kreislauf zurückgeführt werden kann (26).

Die gestrippte organische Extraktionslösung (23), in der der Komplexbildner in protonierter Form vorliegt, wird nun vorzugsweise in einen oder mehrere weitere _{"}mixer-settler" (27) überführt worin sie mit der ammoniakhaltigen Waschwasser aus der ersten Waschstufe (12), deren Wasser einen pH-Wert über 6,5 aufweist, in Kontakt gebracht wird. Hierbei wird der größte Teil des freien Ammoniaks aus der wäßrigen Phase durch Extraktion in die gestrippte organische Phase überführt, die wäßrige Phase wird also durch Waschen mit dem organischen, regenerierten Extraktionsmittel weitgehend vom Ammoniak befreit. Das so mit Ammoniak angereicherte organische Extraktionsmittel wird nun vorzugsweise wieder zur Extraktion der beladenen, wäßrigen Ätzlösung benutzt (28). Die freien Wertmetallionen aus der Ätzlösung (1) setzen dabei in einer oder mehreren Extraktionsstufen (2, 3, 4) den gebundenen Ammoniak unter eigener Komplexbildung weitgehend frei, wodurch dieser in die Ätzlösung, und damit in den Ätzkreislauf zurückgeführt wird (7).

Das vom Ammonial weitgehend befreite Waschwasser wird erfindungsgemäß erneut in die erste Waschstufe (12) eingebracht (26).

Der Übergang der Wertmetallionen aus der wässrigen in die organische Phase während der Extraktionsschritte wird durch einen im wesentlichen hydrophoben Komplexbildner unterstützt, der durch spezifische oder unspezifische Wechselwirkung und/oder Koordination mit dem Wertmetallion eine Kompensierung und/oder Abschirmung der Ladung des Wertmetallions dergestalt erreicht, daß die Polarität in ausreichendem Maße abgesenkt wird um die Löslichkeit des lons in der wäßrigen Phase zugunsten einer verbesserten Löslichkeit des Komplexes in dem organischen Lösungsmittel unter gleichzeitigem Übergang in die organische Phase abzuändern.
Zu den Komplexierungsmitteln die zur Ausbildung solcher Wechselwirkungen mit Wertmetallionen in der Lage sind gehören bestimmte Phosphorverbindungen, ß-Diketone, organische Carbonsäuren, aromatische Amine, Phenole, Ketoxime, Aldoxime und weitere Chelatbildner. Beispiele für einzelne Stoffklassen sind z.B. Di-(2-ethylhexyl)phosphorsäure, Acetylaceton, Oxalsäure, Zitronensäure, 2,2'-Bipyridyl, o-Phenylendiamin, Salicylaldehyd, Ethylendiamintetraessigsäure, wobei die Zuordnung der einzelnen Extraktionsmittel zu den bevorzugt damit zu komplexierenden Metallionen dem Fachmann geläufig ist.

Erfindungsgemäß besonders bevorzugt sind die Verfahren, bei denen als Komplexbildner Aldoxime und/oder Ketoxime verwendet werden.
In einer insbesondere bevorzugten Ausführungsform kommen solche organischen Extraktionsmittel zum Einsatz, die die Komplexbildner in einem Anteil von 1 bis 99 Gew.-%, bevorzugt in einem Anteil von 5 bis 35 Gew.-% und insbesondere bevorzugt in einem Anteil von 10 bis 30 Gew.-% enthalten. Die Konzentration der Komplexbildner im Lösungsmittel ist so zu bemessen, daß die physikalischen Eigenschaften der Extraktionslösung sowohl mit protoniertem als auch mit komplexiertem Komplexbildner eine Handhabung im Sinne der Erfindung zulassen, wobei eine solche Konzentration an Komplexbildnem im Extraktionsmittel bevorzugt ist, die zu einer bei Raumtemperatur flüssigen, niedrigviskosen Lösung führt.

In einer ganz besonders bevorzugten Ausführungsform der Erfindung wird als Wertmetall Kupfer gewonnen, wobei das Kupfer vorzugsweise aus der Bearbeitung kupferhaltiger elektronischer Baugruppen erhalten wird.

### Beispiele

### Beispiele zur Bestimmung der erzeugten Menge Salz pro transportierter Menge Kupfer durch zwei verschiedene Methoden

### LIX^{®}84 ist ein Extraktionsmittel vom Ketoxim-Typ.

### Methode A (erfindungsgemäß):

Eine verbrauchte, ammoniakalische Ätzlösung mit einem Gehalt von 129 g/l Kupfer und etwa 160 g/l gesamt-Ammoniak, wobei der größte Teil des Ammoniams inForm des Kupfer-Ammoniumchlorid-Komplexes vorilegt, wurde kontinuierlich in drei sukzessiven Extraktionsstufen (2,3,4) mit einer 30 Vol.-%igen Lösung von LIX^{®}84 in Kerosin extrahiert. Der Zufluß der wäßrigen und der organischen Komponenten wurde dabei so geregelt, daß sich in der Extraktionsstufe ein konstantes Verhältnis (O/A) zwischen organischer Phase (O) und wässriger Phase (A) einstellte. Die beladene organische Phase wurde über einen Abscheider und einen Pufferbehälter von eingeschleppter wäßriger Phase weitgehend befreit und nachfolgend in einer ersten Waschstufe (12) mit einer 1 Gew.-%igen Lösung von Ammoniumchlorid in Wasser gewaschen, wobei der Zufluß der wäßrigen und der organischen Komponente so geregelt wurde, daß sich in der ersten Waschstufe ein konstantes Verhältnis (O/A) zwischen organischer Phase (O) und wässriger Phase (A) einstellte. Nachfolgend wurde die abgetrennte organische Phase nochmals mit einer Lösung von 1 Gew.% Natriumsulfat in Wasser gewaschen (14), der zur Einstellung des pH-Werts auf 6.0 geringe Mengen des kupferhaltigen Elektrolyts aus der nachfolgenden Stripping-Stufe (17) zugegeben wurde. Hierbei wurde der Zufluß der wäßrigen und der organischen Komponenten so geregelt, daß sich in der zweiten, pH-kontrollierten Waschstufe (15) ein konstantes Verhältnis (O/A) zwischen organischer Phase (O) und wässriger Phase (A) einstellte. In den nachfolgenden Stripping-Stufen (17, 18) wurde die kupferbeladene organische Phase mit dem kupferabgereicherten Elektrolyten aus der Gewinnungselektrolyse (20) kontaktiert und so die Kupferionen gestrippt. Ein geringer Teil der so erhaltenen, schwefelsauren Strip-Lösung wurde zur oben genannten Einstellung des pH-Werts in der zweiten Waschstufe eingesetzt (21). Der Extraktion wurde eine zusätzliche Waschstufe vorgeschaltet, in der die gestrippte organische Phase nach Durchlaufen des Abscheiders (24) und des Puffergefäßes (25) mit dem ammoniakhaltigen Waschwasser aus der ersten Waschstufe (12) kontaktiert wurde. Hierbei wurde der größte Teil des freien Ammoniaks aus der wäßrigen Phase durch Extraktion in die organische gestrippte Phase überführt, die wäßrige Phase wurde also durch Waschen mit dem organischen Extraktionsmittel weitgehend vom Ammoniak befreit. Das so mit Ammoniak angereicherte organische Extraktionsmittel wurde nun wieder zur Extraktion der beladenen wäßrigen Atzlösung (28) benutzt. Die freien Kupfer-lonen setzten dabei in den Extraktionsstufen (2, 3, 4) den gebundenen Ammoniak unter eigener Komplexbildung weitgehend frei, wodurch dieser in die Ätzlösung zurückgeführt wurde.
Zur Beurteilung der Effizienz des Verfahrens wurden der Säureverbrauch in der pH-kontrollierten Waschstufe (15) sowie die Menge an erzeugtem Ammoniumsalz in Abhängigkeit von der transferierten Menge Kupfer in der organischen Phase herangezogen. In der nachfolgenden Tabelle 1 sind die Ergebnisse bei unterschiedlichen Reaktionsparametem zusammengestellt.

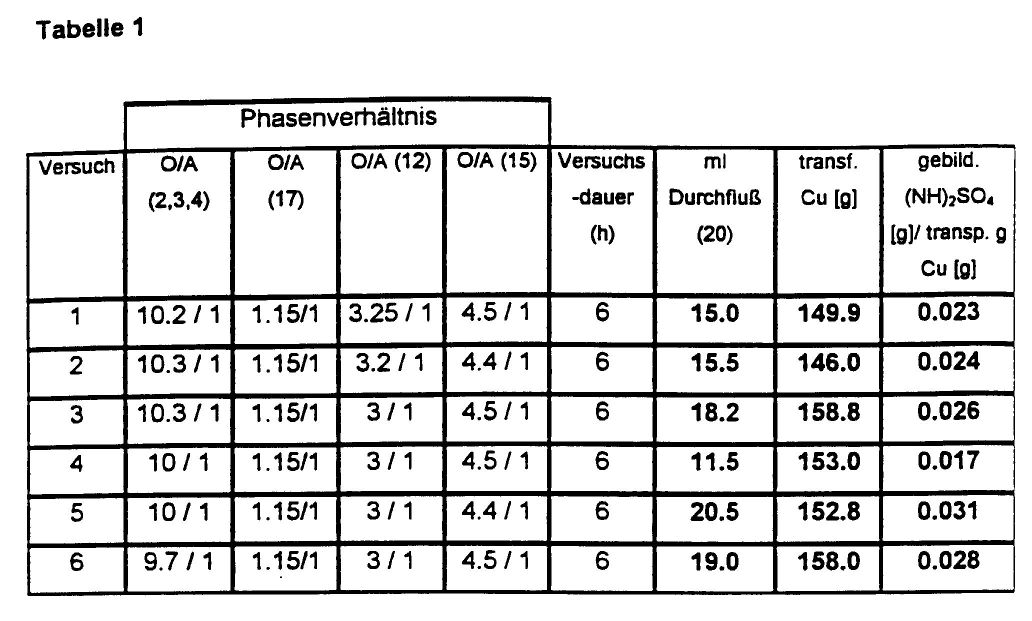

### Methode B (Vergleichsbeispiel):

Eine ammoniakalische Ätzlösung mit einem Gehalt von 129 g/l Kupfer und ca. 160 g/l Ammoniak, wobei der größte Teil des Ammoniaks in Form des Kupfer-Ammoniumchlorid-Komplexes vorliegt, wurde kontinuierlich in drei sukzessiven Extraktionsstufen mit einer 30 %igen Lösung von LIX^{®}84 in Kerosin extrahiert. Der Zufluß der wäßrigen und der organischen Komponenten wurde dabei so geregelt, daß sich in der Extraktionsstufe (E) ein konstantes Verhältnis zwischen organischer Phase (O) und wässriger Phase (A) einstellte.
Im Vergleich zu Methode A wurde hier nur eine, pH-kontrollierte Waschstufe mit einer 1 Gew.-%igen Lösung von Ammoniumsulfat in Wasser für die beladene organische Phase benutzt. ferner wurde der Extraktion eine separate Waschstufe mit einer 1 Gew.-%igen Lösung von Ammoniumchlorid in Wasser für die gestrippte organische Phase vorgeschaltet.
Die beladene organische Phase wurde über einen Abscheider und einen Pufferbehälter von eingeschleppter wäßriger Phase weitgehend befreit und nachfolgend in einer seriellen, pH-kontrollierten Waschstufe (W1) mit einer 1 Gew.-%igen Lösung von Ammoniumsulfat in Wasser gewaschen, dem zur Einstellung des pH-Werts auf 6.0 der saure, kupferabgereicherte Elektrolyt (P.E.) aus der Gewinnungselektrolyse zugegeben wurde. Hierbei wurde der Zufluß der wäßrigen und der organischen Komponenten so geregelt, daß sich in der pH-kontrollierten Waschstufe (W1) ein konstantes Verhältnis zwischen organischer Phase (O) und wässriger Phase (A) einstellte. In der nachfolgenden Stripping-Stufe (S) wurde die kupferbeladene organische Phase mit dem abgereicherten elektrolyten aus der Gewinnungselektrolyse kontaktiert und so die Kupfer-lonen gestrippt.

Zur Beurteilung der Effizienz des Verfahrens wurden der Säureverbrauch in der pH-kontrollierten Waschstufe sowie die Menge an erzeugten Ammoniumsalz in Abhängigkeit von der transferierten Menge Kupfer in der organischen Phase herangezogen. In der nachfolgenden Tabelle 2 sind die Ergebnisse zusammengestellt.

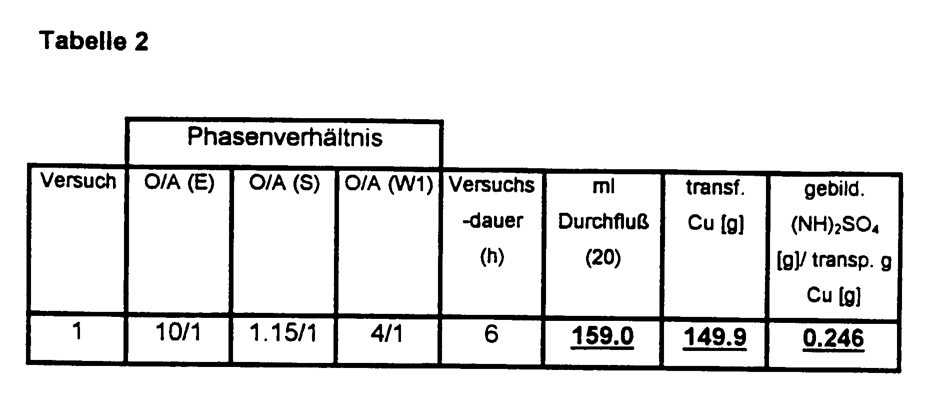

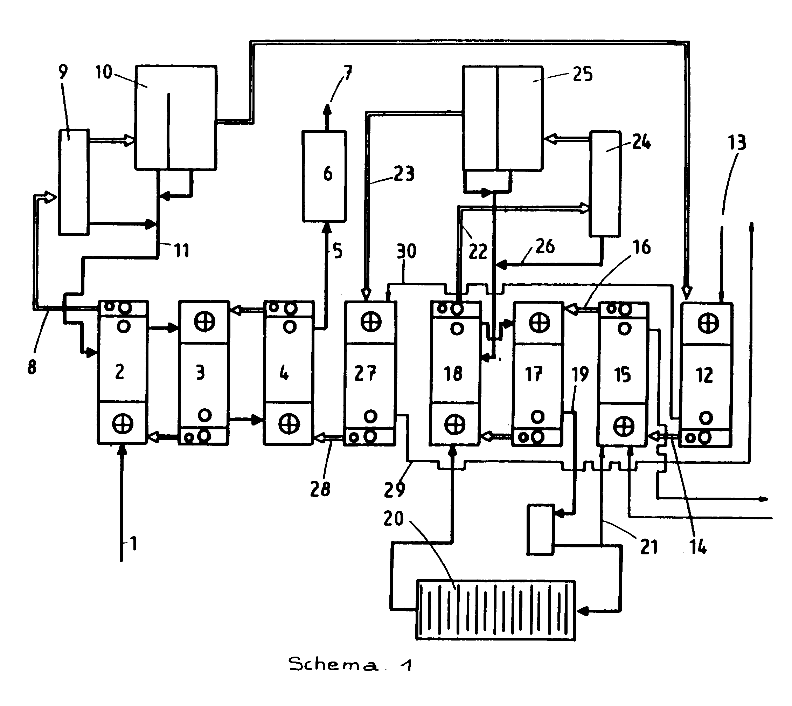

## Patentansprüche

1. Verfahren zur Aufarbeitung von wässrigen Lösungen, die Ammoniak, mindestens ein Ammoniumsalz sowie Metallionen in gelöster Form enthalten, und die bei der Behandlung wertmetallhaltiger Substrate anfallen, wobei die Aufarbeitung mindestens aus
a) einer oder mehreren Extraktionsstufen, wobei die wertmetallhaltige Lösung mit einem organischen, nicht mit Wasser mischbaren Extraktionsmittel in Kontakt gebracht wird,
b) einer oder mehreren sukzessiven Waschstufen, in denen das abgetrennte, wertmetallhaltige, organische Extraktionsmittel mit wässrigen Flüssigkeiten gewaschen wird sowie
c) einer oder mehreren Stripping-Stufen, in denen das Wertmetall aus der organischen in eine wässrige Phase überführt wird und in denen das organische Extraktionsmittel regeneriert wird,
besteht, **dadurch gekennzeichnet**, daß in der ersten Waschstufe Wasser verwendet wird, dessen pH-Wert über 6,5 liegt, und dieses Waschwasser nach der Waschstufe vor dem erneuten Gebrauch mit dem organischen, regenerierten Extraktionsmittel in Kontakt gebracht wird.

2. Verfahren nach Anspruch 1, dadurch gekennzeichnet, daß in der ersten Waschstufe Wasser mit einem Gehalt von 0,1 bis 10 Gew.-% Ammoniumchlorid eingesetzt wird.

3. Verfahren nach einem der Ansprüche 1 oder 2, dadurch gekennzeichnet, daß in der ersten Waschstufe Wasser mit einem Gehalt an Ammoniumchlorid von 0.5 bis 5 Gew.-% eingesetzt wird.

4. Verfahren nach einem der Ansprüche 1 bis 3, dadurch gekennzeichnet, daß in der zweiten Waschstufe Wasser mit einem pH-Wert zwischen 4.5 und 6.5 verwendet wird.

5. Verfahren nach den Ansprüchen 1 bis 4, dadurch gekennzeichnet, daß eine organische Extraktionslösung, die einen oder mehrere Komplexbildner in einem organischen Lösungsmittel enthält, die mit Metallionen einen in der organischen Extraktionslösung löslichen Komplex bilden, eingesetzt wird.

6. Verfahren nach einem der Ansprüche 1 bis 5, dadurch gekennzeichnet, daß als Komplexbildner Aldoxime und/oder Ketoxime verwendet werden.

7. Verfahren nach einem der Ansprüche 1 bis 6, dadurch gekennzeichnet, daß organische Extraktionsmittel, die die Komplexbildner in einem Anteil von 1 bis 99 Gew.-% enthalten, verwendet werden.

8. Verfahren nach einem der Ansprüche 1 bis 7, dadurch, gekennzeichnet, daβ organische Extraktionsmittel, die die Komplexbildner in einem Anteil von 5 bis 35 Gew.-% enthalten, verwendet werden.

9. Verfahren nach einem der Ansprüche 1 bis 8, dadurch gekennzeichnet, daß als Wertmetall Kupfer gewonnen wird.

10. Verfahren nach Anspruch 9, dadurch gekennzeichnet, daß das Kupfer aus der Bearbeitung kupferhaltiger elektronischer Baugruppen erhalten wird.

## Claims

1. A process for working up aqueous solutions which contain ammonia, at least one ammonium salt and metal ions in dissolved form and which accumulate in the treatment of substrates containing valuable metals, the working up process comprising at least
a) one or more extraction stages in which the solution containing valuable metals is contacted with an organic water-immiscible extractant,
b) one or more successive washing stages in which the organic extractant containing useful metals separated off is washed with water-containing liquids and
c) one or more stripping stages in which the valuable metal is transferred from the organic phase to an aqueous phase and in which the organic extractant is regenerated,
characterized in that water with a pH value above 6.5 is used in the first washing stage and, after the washing stage, the washing water is contacted before reuse with the organic regenerated extraction solution.

2. A process as claimed in claim 1, characterized in that water containing 0.1 to 10% by weight of ammonium chloride is used in the first washing stage.

3. A process as claimed in claim 1 or 2, characterized in that water containing 0.5 to 5% by weight of ammonium chloride is used in the first washing stage.

4. A process as claimed in any of claims 1 to 3, characterized in that water with a pH value of 4.5 to 6.5 is used in the second washing stage.

5. A process as claimed in claims 1 to 4, characterized in that an organic extraction solution which, in an organic solvent, contains one or more complexing agents forming a complex soluble in the organic extraction solution with metal ions is used.

6. A process as claimed in any of claims 1 to 5, characterized in that aldoximes and/or ketoximes are used as complexing agents.

7. A process as claimed in any of claims 1 to 6, characterized in that organic extractants containing 1 to 99% by weight of the complexing agents are used.

8. A process as claimed in any of claims 1 to 7, characterized in that organic extractants containing 5 to 35% by weight of the complexing agents are used.

9. A process as claimed in any of claims 1 to 8, characterized in that copper is recovered as the valuable metal.

10. A process as claimed in claim 9, characterized in that the copper is obtained from the treatment of copper-containing electronic subassemblies.

## Revendications

1. Procédé de traitement de solutions aqueuses qui contiennent de l'ammoniac, au moins un sel d'ammonium, ainsi que des ions métalliques sous forme dissoute, et qui apparaissent dans le traitement des substrats contenant de l'eau usée, le traitement étant constitué d'au moins :
a) une ou plusieurs étapes d'extraction dans lesquelles on met en contact la solution contenant un métal utile, avec un agent d'extraction organique non miscible à l'eau,
b) une ou plusieurs étapes de lavage successives, dans lesquelles on lave avec des liquides aqueux l'agent d'extraction organique contenant des métaux utiles séparé, ainsi que
c) une ou plusieurs étapes de purification dans Lesquelles on transfère le métal utile provenant de la phase organique, dans une phase aqueuse, et dans lesquels on régénère l'agent d'extraction organique,
caractérisé en ce que
. dans la première étape de lavage, on utilise de l'eau dont le pH est supérieur à 6,5, et,
. on met en contact cette eau de lavage, après l'étape de lavage et avant de la réutiliser à nouveau, avec l'agent d'extraction organique régénéré.

2. Procédé selon la revendication 1,
caractérisé en ce que
dans la première étape de lavage on utilise de l'eau contenant O,1 à 10 % en poids de chlorure d'ammonium.

3. Procédé selon l'une des revendications 1 ou 2,
caractérisé en ce que
dans la première étape de lavage on utilise de l'eau ayant une teneur de 0,5 à 5 % en poids de chlorure d'ammonium.

4. Procédé selon l'une des revendications 1 à 3,
caractérisé en ce que
dans la seconde étape de lavage on utilise de l'eau ayant un pH compris entre 4,5 et 6,5.

5. Procédé selon les revendications 1 à 4,
caractérisé en ce qu'
on utilise une solution d'extraction organique qui contient un ou plusieurs agents de complexation dans un solvant organique, qui forment avec les ions métalliques un complexe soluble dans la solution d'extraction métallique.

6. Procédé selon l'une des revendications 1 à 5, caractérisé en ce qu'
on utilise comme agents de complexation des aldoximes et/ou des cétoximes.

7. Procédé selon l'une des revendications 1 à 6,
caractérisé en ce qu'
on utilise des agents d'extraction organiques qui contiennent un agent de complexation en une proportion de 1 99 % en poids,

8. Procédé selon l'une des revendications 1 à 7,
caractérisé en ce qu'
on utilse des agents d'extraction organiques qui contiennent des agents de complexation en une proportion de 5 à 35 % en poids.

9. Procédé selon l'une des revendications 1 à 8,
caractérisé en ce qu'
on obtient le cuivre comme métal utile.

10. Procédé selon la revendication 9,
caractérisé en ce qu'
on obtient du cuivre à partir du traitement de composants électroniques contenant du cuivre.
